# EUROPEAN PATENT APPLICATION

(11) **EP 3 706 050 A1**
(43) Date of publication of application: **09.09.2020**
(21) Application number: 19160672.2
(22) Date of filing: 05.03.2019
(51) Int. Cl.: G06Q 10/00

(54) **COMPUTER IMPLEMENTED METHOD AND PROCESSING DEVICE FOR PROCESSING MAINTENANCE INFORMATION IN A DISTRIBUTED DATABASE SYSTEM USING A STORAGE DRIVER UNIT**

(71) Applicant: Siemens Aktiengesellschaft, 80333 München (DE)
(72) Inventor: Katrych, Sergii, 81737 München (DE); Pfeuffer, Evelyn, 81673 München (DE); Radulescu Kobler, Mihai, 5122 Ach (AT)

(57) **Abstract**

The invention relates to a computer implemented method 10 and a processing device 100 for processing maintenance information in a distributed database system 20. In a first step S1 a task 51, 61, 71 from an agent 50 is received by a storage driver unit 110, wherein the received task 51, 61, 71 comprises a maintenance operation type and a maintenance operation type dependent maintenance information. In a further step S2 an operation request 52, 62, 72 on the basis of the received task 51, 61, 71 is generated by the storage driver unit 110, wherein the generated operation request comprises an event and the maintenance information of the received task. In a further step S3 the generated operation request 52, 62, 72 by an observer unit 120 is captured and a maintenance operation according to the operation type dependent maintenance information of the captured operation request in a first database 30 of said distributed database system 20 on the basis of the event is performed. In a further step S4 an operation request response 54, 64, 74 to the storage driver unit 110 depending on the performed maintenance operation is returned by the observer unit 120, wherein the returned operation request response comprises a reference 55 to the maintenance information within the first database 30 of said distributed database system 20.

Due to the present invention, blockchain solutions can be used for scenarios where data removing and altering functionality is required.

## Description

The invention relates to a computer implemented method and processing device for processing maintenance information in a distributed database system.

The technology of blockchains or "Distributed Ledgers" is currently an intensively discussed technology, which can be realized, in particular, as a distributed database system. In addition to applications for decentralized payment systems (e.g. Bitcoin), new applications are being developed in the financial industry. In particular, transactions between companies can be realized without an intermediary or clearing house, protected against manipulation. This enables new business models without a trustworthy arbiter, reduces transaction costs, and new digital services can be offered flexibly without having to set up a special set up infrastructure and trusted relationships. A transaction record or transaction protected by a blockchain includes program code, for instance, which can also be referred to as a "smart contract".

In connection with the invention, under the term a "distributed database system" that can also be referred to as a distributed database, can be understood a distributed database, a blockchain, a distributed ledger, a distributed storage system, a distributed ledger technology (DLT) based system (DLTS), an audit-proof database system, a cloud, a cloud service, a blockchain in a cloud or a peer-to-peer database. Also, different implementations of a blockchain or DLTS can be used, such as a blockchain or DLTS that can be implemented using a Directed Acyclic Graph (DAG), a cryptographic puzzle, a hash graph, or a combination of the above implementation variants. Different consensus algorithms can also be implemented. This can be for instance a consensus procedure using a cryptographic puzzle, Gossip about Gossip, virtual voting or a combination of the mentioned procedures (e.g. Gossip about Gossip combined with virtual voting). For instance, if a blockchain is used, it can be implemented by means of a Bitcoin-based implementation or an Ethereum-based implementation.

A "distributed database system" can also be understood, for instance, as a distributed database system of which at least some nodes and/or devices and/or infrastructure are realized by a cloud. For example, the corresponding components are realized as nodes/devices in the cloud (e.g. as virtual nodes in a virtual machine). This can be done for instance by using VM-Ware (trademarks), Amazon Web Services (trademarks) or Microsoft Azure (trademarks). Due to the high flexibility of the implementation variants described above, partial aspects of the implementation variants mentioned can also be combined with each other, e.g. by using a hash graph as a block chain, whereby the block chain itself can also be blockless.

The blockchain is a growing list of records, called blocks or data blocks, which are linked using cryptography. Each data block contains, for instance, a cryptographic hash of the previous data block in the blockchain, a timestamp, and transaction data. By the design of the blockchain, a blockchain is resistant to modification of the transaction data.

The blockchain is an open, distributed ledger that can record transactions between, for instance, two parties efficiently and in a verifiable and permanent way. Transactions data once recorded in any given data block cannot be deleted or altered retroactively without alteration of all subsequent blocks, which requires consensus of the network majority. Due to that subsequent transactions are built on previous transactions and confirm these as correct by proving knowledge of the previous transactions. This makes it impossible to manipulate or erase the existence or content of previous transactions without destroying all subsequent transactions at the same time. Although blockchain records are not unalterable, blockchains are considered secure by design.

In a lot of real-life scenario, it can be necessary to be able to delete or to alter data, in particular personal data, but without using, for instance, a blockchain to secure the data. Even if the blockchain technology may fit a lot of real-life scenarios where user data is involved, according to the German law named DSGVO "Datenschutz-Grundverordnung" it currently cannot be used because of it append-only nature. This reduces the blockchain solution applicability. For instance, personal data such as name, day of birth, place and the like should be erasable if desired by the data owner.

One of the most common ways of data removal is to "mark" the involved data as deleted and to hide the data from the user or business through implementation. In this way the data may be not query-able over, for instance, by a business API (application programming interface) but the data are still present in the system, in particular, in the blockchain.

One of the major disadvantages for this approach is that the data are hidden but not deleted. In this way, for instance, developers are still able to bypass the API and will get access to personal data that was supposed to be deleted.

A further common approach for deletion of data is to segregate user data across many different chains which can be joined (in technical jargon they are interoperable). This enables total privacy and the ability to be forgotten. However, such a solution increases the effort for management and/or operation and in result the data are still available, even if in a private and not-accessible blockchain solution.

Accordingly, it is an object of the present invention to provide a deleting and/or altering functionality for certain data stored in a blockchain.

This object is achieved according to a first aspect of the present invention by a computer implemented method for processing maintenance information in a distributed database comprising the features of claim 1.

The invention provides according to the first aspect a computer implemented method for processing maintenance information in a distributed database system comprising the steps of:
Receiving by a storage driver unit a task from an agent, wherein the received task comprises a maintenance operation type and a maintenance operation type dependent maintenance information,
Generating by the storage driver unit an operation request on the basis of the received task, wherein the generated operation request comprises an event and the maintenance information of the received task,
Capturing the generated operation request by an observer unit performing a maintenance operation according to the operation type dependent maintenance information of the captured operation request in a first database of said distributed database system on the basis of the event, and
Returning by the observer unit an operation request response to the storage driver unit depending on the performed maintenance operation, wherein the returned operation request response comprises a reference to the maintenance information within the first database of said distributed database system.

In connection with the invention, "computer implemented" can be understood to mean, for instance, an implementation of the procedure in which, in particular, a processor executes at least one method step of the method.

Further a maintenance information comprises, for instance, certain information in written or phonetic form, data, digital data, analogue data, and the like.

Further a maintenance operation type comprises operations to process maintenance information in a digital environment, e.g. computer, databases and the like. The operation includes storing, removing, updating, copying, replacing of maintenance information and/or the like.

In connection with the invention, "first database" can be understood to mean, for instance, a memory unit or a memory module and/or the like, that is configured to store information and data, for instance a hard disk drive (HDD) or a flash memory or a random-access memory (RAM) and the like. The memory may be storing a database.

With the method or system according to the present invention it is possible to provide a blockchain component able to provide storing functionality. The storing functionality according to the present invention provides the basis for further deleting and updating functionalities in a blockchain. The blockchain component may be provided as a reusable piece of software. The component is generic and can be applied to any blockchain. Every second generation of blockchain supports at least one programming language, for instance, Ethereum supports Solidity, Neo supports Solidity and Java supports Kotlin. The present invention can be applied to any kind of blockchain solution and does not depend on a certain implementation of the blockchain.

An advantage of the method and device for processing device according to the present invention is that it is possible to use a blockchain solution for scenarios where data deletion is involved. Therefore, it is possible to convert any blockchain solution in a full DSGVO compliant way. Personal data as wished by the data owner can be completely deleted if desired by the data owner, which fulfills the technical requirements of the DSGVO. Further the data entries (personal data, reference to the personal data) are scoped separated and user specific. Further a time/period specific scope can be introduced.

In a possible embodiment of the method according to the first aspect of the present invention the operation type dependent maintenance information of the received task is encrypted.

In this way, advantageously, only authorized parties have access to the maintenance information and those who are not authorized cannot access to the maintenance information.

For instance, this can be achieved by using the distributed database system to provide or transmit or send corresponding data/transactions. This is preferably achieved by a combination of the various (cryptographic) checksums, in which these interact synergistically, for instance, to improve the security or cryptographic security of the transaction data. In other words, "security protected" in connection with the invention can also be understood as "cryptographically protected" and/or "manipulation protected", whereby "manipulation protected" can also be described as "integrity protected".

In a further possible embodiment of the method according to the first aspect of the present invention the reference comprises a random hash reference.

Under a "reference", for instance, a data block reference, a data checksum, a node checksum, a transaction checksum, a concatenation checksum or the like, can be understood according to the present invention a cryptographic checksum or a cryptographic hash or hash value which is formed or calculated in particular by means of a cryptographic hash function over a data record and/or data and/or one or more of the transactions and/or a partial area of a data block (e.g. the block header of a block of a block chain or data block header of a data block of the distributed database system or only a part of the transactions of a data block).

In particular, a checksum can be a checksum(s) or hash value(s) of a hash tree (e.g. Merkle tree, Patricia tree). Furthermore, it can also be a digital signature or a cryptographic message authentication code. By means of the checksums, for instance, cryptographic protection/manipulation protection for the transactions and the data (records) stored therein can be implemented on different levels of the database system. For instance, if a high level of security is required, the checksums are generated and checked at transaction levels. If less security is required, the checksums are generated and checked at block level (for instance, for the entire data block or only for parts of the data blocks and/or part of the transactions).

In connection with the invention, a "data block checksum" can be understood as a checksum that is calculated, for instance, for part or all of the transactions of a data block. A node can then, for instance, check/establish the integrity/authenticity of the corresponding part of a data block using the data block checksum. In addition, or alternatively, the data block checksum can also have been formed using transactions of a preceding data block/predecessor data block of the data block.

The data block checksum can also be implemented using a hash tree, such as a Merkle tree or a Patricia tree, where the data block checksum is the root checksum of the Merkle tree or a Patricia tree or a binary hash tree. In particular, transactions are hedged using further checksums from the Merkle tree or Patricia tree (e.g. using the transaction checksums), whereby in particular the other checksums are sheets in the Merkle tree or Patricia tree. The data block checksum can thus, for instance, secure the transactions by forming the root checksum from the other checksums. The data block checksum can be calculated especially for transactions of a certain data block of the data blocks.

In particular, such a data block checksum can be included in a subsequent data block of the particular data block in order to link this subsequent data block with its preceding data blocks, for instance, and thus make the integrity of the distributed database system verifiable. In this way, the data block checksum can, for instance, assume the function of the concatenation checksum or be included in the concatenation checksum. The header of a data block (for instance, a new data block or the data block for which the data block checksum was formed) can include the data block checksum.

The term "transaction checksum" can be used in connection with the invention to refer to a checksum that is formed in particular from a transaction in a data block. In addition, a calculation of a data block checksum for a corresponding data block can be accelerated, since, for instance, transaction checksums that have already been calculated can be used as leaves of a Merkle tree.

In connection with the invention, a "concatenation checksum" can be understood as a checksum which, in particular, specifies or references a respective data block of the distributed database system to the preceding data block of the distributed database system. For this purpose, a corresponding concatenation checksum is formed for the corresponding preceding data block.

It can be used a transaction checksum or the data block checksum of a data block (that is, an existing data block of the distributed database system) as a concatenation checksum to concatenate a new data block with an (existing) data block of the distributed database system. However, it is also possible, for instance, for a checksum to be formed over a header of the preceding data block or over the entire preceding data blocks and used as a concatenation checksum.

This can, for instance, also be calculated for several or all previous data blocks.

It is also possible, for instance, to calculate the concatenation checksum using the header of a data block and the data block checksum. However, a data block in the distributed database system preferably contains a concatenation checksum that was calculated for a preceding data block of the data block, and in particular the data block directly preceding it, or that refers to this data block. It is also possible, for instance, that a corresponding concatenation checksum is formed for only part of the corresponding data block (for instance, the preceding data block). This can be used, for instance, to create a data block that includes an integrity-protected part and an unprotected part. This could be used, for instance, to create a data block whose integrity-protected part is unchangeable and whose unprotected part can also be changed later. Integrity-protected means in particular that a change of integrity-protected data can be determined by means of a checksum.

Advantageously, the reference may include a location indication (e.g. an address of a file server and where the corresponding data can be found on the file server; or an address of another distributed database containing the data). The corresponding data could then, for instance, also be provided in another transaction of another data block of the distributed database system (for instance, if the corresponding data and the corresponding checksums are contained in different data blocks). It is also possible, for instance, that this data is provided via another communication channel (for example, via another database and/or a cryptographically secured communication channel). This is particularly advantageous in order to keep the data size of the block chain or the distributed database system as small as possible. Further it is advantageous in order to delete or alter the data without damaging the integrity of the blockchain.

In a still further possible embodiment of the method according to the first aspect of the present invention the maintenance operation type indicated by the received task comprises storing maintenance information in the first database of said distributed database system.

Advantageously, the present invention can be performed to store data in a first database by adding a reference for the stored data in a blockchain of the distributed database system.

In a still further possible embodiment of the method according to the first aspect of the present invention the maintenance operation type indicated by the received task comprises removing maintenance information from the first database of said distributed database system.

Advantageously, the present invention can be performed to delete maintenance information from the first database without damaging the integrity of the blockchain.

In a still further possible embodiment of the method according to the first aspect of the present invention the maintenance operation type indicated by the received task comprises updating maintenance information in the first database of said distributed database system.

Advantageously, the present invention can be performed to update respectively to alter stored information in the first database without damaging the integrity of the blockchain.

In a still further possible embodiment of the method according to the first aspect of the present invention the operation request comprises a store operation request to store the maintenance information in the first database by the observer unit.

In a still further possible embodiment of the method according to the first aspect of the present invention the operation request comprises a remove operation request to remove the maintenance information within the first database.

In a still further possible embodiment of the method according to the first aspect of the present invention the operation request comprises an update operation request to replace a maintenance information stored in the first database by encapsulating the reference for the maintenance information previously stored with an updated maintenance information.

Advantageously, the present invention, respectively the storage driver unit functionality is event based. The functionality of storing, deleting, and updating is implemented by separate events. Therefore, the storage driver functionality can be imported as a library or dependency in existing distributed database systems.

The store operation request is emitted to indicate a storage operation of maintenance information stored in a first database. The store operation request encapsulates the maintenance information to be stored in the first database. The remove operation request is emitted to indicate a remove operation of maintenance information stored in a first database. The remove operation request encapsulates the reference, for instance, the unique reference for the maintenance information previously stored. The maintenance information to which the reference refers to will be removed. The update operation request is emitted to indicate an update information operation of maintenance information stored in the first database. The update operation request encapsulates the unique reference to the maintenance information previously stored and the new content for this maintenance information. The content of the maintenance information to which the reference refers to will be replaced by new content.

In a still further possible embodiment of the method according to the first aspect of the present invention the operation request response comprises a store operation request response to acknowledge the storage of the maintenance information encapsulated the reference of the maintenance information stored in the first database.

In a still further possible embodiment of the method according to the first aspect of the present invention the operation request response comprises a remove operation request response to acknowledge the remove of the maintenance information stored in the first database.

In a still further possible embodiment of the method according to the first aspect of the present invention the operation request response comprises an update operation request response to acknowledge the update of the information in the first database.

Advantageously, the observer unit functionality is event based. The functionality of storing, deleting, and updating is implemented by separate events. Therefore, for each event sent by the driver storage unit, a response event is provided by the observer unit. The response event indicates a fulfilled operation to a first database, respectively to an external database in a distributed database system.

The store operation request response is emitted to acknowledge a storage operation of maintenance information in a first database of the distributed database system. The store operation request response encapsulates the unique reference for the stored maintenance information. The reference may be provided to an agent for further processing of the maintenance information, for instance, to remove the maintenance information from the first database or to update the maintenance information in the maintenance information by replacing the content of the maintenance information to which the reference refers to. Further the reference may be stored in a second distributed database of the distributed database system to build up a cryptical chain providing by itself consistency of its data.

The remove operation request response is emitted to acknowledge a remove operation in a first database of the distributed database system. The remove operation request response encapsulates the unique reference for the maintenance information removed from the first database. The update operation request response is emitted to acknowledge an update operation of maintenance information stored in the first database. The update operation request response encapsulates the unique reference for the updated maintenance information.

In a still further possible embodiment of the method according to the first aspect of the present invention the method further comprises the step of storing by the storage driver unit the reference in a second distributed database of said distributed database system on the basis of the store operation request response.

Advantageously, the agent may choose to store the reference in a blockchain solution where data integrity is required. Further, by storing only the reference in the blockchain solution, the requirements of the DSGVO are fulfilled.

In a still further possible embodiment of the method according to the first aspect of the present invention the method further comprises the step of deleting by the storage driver unit the maintenance information in the first database of said distributed database system on the basis of the remove operation request.

Advantageously, if an agent requires data in the blockchain to be deleted, it would not be able to remove the unique reference from the blockchain. But the agent is able to make the reference stored in the blockchain invalid by deleting the content of the maintenance information stored in the first database that the reference refers to. Thus, the reference stored in the blockchain cannot be used to deduce the maintenance information. A reference that points to a removed maintenance information is not a valid reference.

In a still further possible embodiment of the method according to the first aspect of the present invention the method further comprises the step of updating by the storage driver unit the maintenance information in the first database of said distributed database system by encapsulating the reference for the maintenance information previously stored with an updated maintenance information on the basis of the update operation request.

Advantageously, if an agent requires data in the blockchain to be updated, it would not be able to update the reference by replacing the reference pointing to a content of a maintenance information stored in the first database. But the agent is able to replace the content of a maintenance information stored in the first database with content of an updated maintenance information. The reference in the first database and in the blockchain remains the same but referring to the content of the updated maintenance information.

In a still further possible embodiment of the method according to the first aspect of the present invention the second distributed database is a blockchain and comprises data blocks.

In a still further possible embodiment of the method according to the first aspect of the present invention the data blocks of the second distributed database are interlinked with each other by a cryptographic hash function.

In connection with the invention, "interlinking of data blocks of a distributed database system" can be understood to mean, for instance, that data blocks each contain one piece of information (e.g., concatenation checksum) that refers to or references another data block or several other data blocks of the distributed database system.

The blockchain comprises interlinked blocks providing data integrity.

In a still further possible embodiment of the method according to the first aspect of the present invention the remove operation request invalidates the reference of the maintenance information so that the reference stored in the second distributed database points to a removed maintenance information.

The reference stored in the blockchain is thus invalid and cannot be used to deduce maintenance information. Thus, the maintenance information is not available or is removed from the blockchain.

The invention further provides according to a second aspect a processing device for processing maintenance information in a distributed database system comprising the features of claim 9.

The invention further provides according to a second aspect a processing device for processing maintenance information in a distributed database system,
said processing device comprising:
a storage driver unit configured to receive a task from an agent, wherein the received task comprises a maintenance operation type and a maintenance operation type dependent maintenance information, further configured to generate an operation request on the basis of the received task, wherein the generated operation request comprises an event and the maintenance information of the received task,
an observer unit configured to capture the generated operation request and to perform a maintenance operation according to the operation type dependent maintenance information of the captured operation request in a first database of said distributed database system on the basis of the event, further configured to return an operation request response to the storage driver unit depending on the performed maintenance operation, wherein the returned operation request response comprises a reference to the maintenance information within the first database of said distributed database system.

In a possible embodiment of the processing device according to the second aspect of the present invention the maintenance operation type indicated by the received task comprises storing maintenance information in the first database of said distributed database system.

In a further possible embodiment of the processing device according to the second aspect of the present invention the maintenance operation type indicated by the received task comprises removing maintenance information from the first database of said distributed database system.

In a still further possible embodiment of the processing device according to the second aspect of the present invention the maintenance operation type indicated by the received task comprises updating maintenance information in the first database of said distributed database system.

In a still further possible embodiment of the processing device according to the second aspect of the present invention the operation request comprises a store operation request to store the maintenance information in the first database by the observer unit.

In a still further possible embodiment of the processing device according to the second aspect of the present invention the operation request comprises a remove operation request to remove the maintenance information from the first database.

In a still further possible embodiment of the processing device according to the second aspect of the present invention the operation request comprises an update operation request to replace a maintenance information stored in the first database (30) by encapsulating the reference for the maintenance information previously stored with an updated maintenance information.

In a still further possible embodiment of the processing device according to the second aspect of the present invention the operation request response comprises a store operation request response to acknowledge the storage of the maintenance information encapsulated the reference of the maintenance information stored in the first database.

In a still further possible embodiment of the processing device according to the second aspect of the present invention the operation request response comprises a remove operation request response to acknowledge the remove of the maintenance information stored in the first database.

In a still further possible embodiment of the processing device according to the second aspect of the present invention the operation request response comprises an update operation request response to acknowledge the update of the information in the first database.

In a still further possible embodiment of the processing device according to the second aspect of the present invention the storage driver unit is further configured to store the reference in a second distributed database of said distributed database system on the basis of the store operation request response.

In a still further possible embodiment of the processing device according to the second aspect of the present invention the storage driver unit is further configured to delete maintenance information in the first database of said distributed database system on the basis of the remove operation request.

In a still further possible embodiment of the processing device according to the second aspect of the present invention the storage driver unit is further configured to update the maintenance information in the first database of said distributed database system by encapsulating the reference for the maintenance information previously stored with an updated maintenance information on the basis of the update operation request.

In a still further possible embodiment of the processing device according to the second aspect of the present invention the remove operation request invalidates the reference of the maintenance information so that the reference stored in the second distributed database points to a removed maintenance information.

The invention further provides according to a third aspect a non-transitory computer-readable medium comprising the features of claim 15.

The invention further provides according to a third aspect a non-transitory computer-readable medium encoded with executable instructions that, when executed, cause a processing device to process the method according to the claims 1 to 8.

In the following possible embodiments of the different aspects of the present invention are described in more detail with reference to the enclosed figures.
- Fig. 1: shows a schematic diagram of a first specific example for illustrating the operation of a method and processing device for processing maintenance information in a distributed database system;
- Fig. 2: shows a schematic diagram of a second specific example for illustrating the operation of a method and processing device for processing maintenance information in a distributed database system;
- Fig. 3: shows a schematic diagram of a third specific example for illustrating the operation of a method and processing device for processing maintenance information in a distributed database system;
- Fig. 4: shows a flowchart of a possible exemplary embodiment of a method for processing maintenance information in a distributed database system;
- Fig. 5: shows a block diagram of a possible exemplary embodiment of a processing device for processing maintenance information in a distributed database system;
- Fig. 6: shows a block diagram of a possible exemplary embodiment of a non-transitory computer-readable medium.

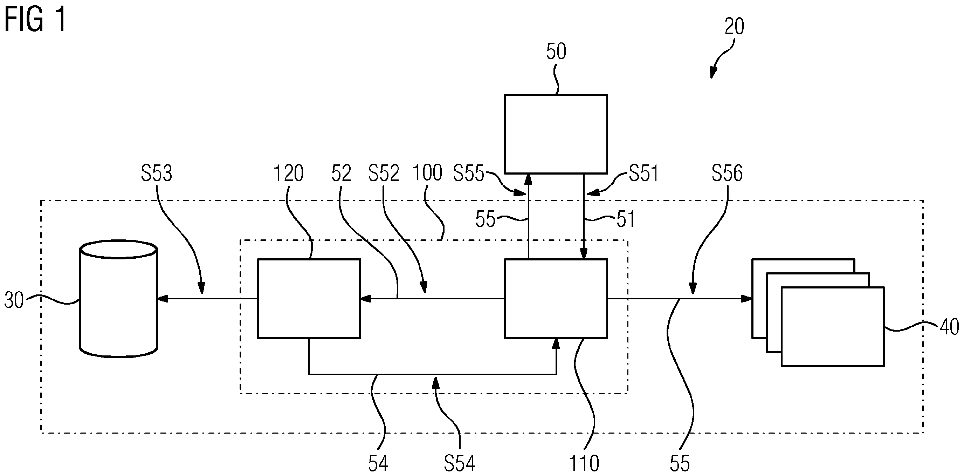

Fig. 1 shows schematically a first specific example illustrating the operation of the method and processing device 100 according to the present invention. In the illustrated exemplary embodiment, an agent 50 provides in a step S51 a task 51 to a storage driver unit 110 of the processing device 100. In an embodiment the agent 50 can include a technical component, module, computer, software component and the like providing maintenance information to the storage driver unit 110 of the processing device 100. In an alternative embodiment, the agent 50 can be a human user, for instance, a developer providing maintenance information to the storage driver unit 110 of the processing device 100.

The task 51 comprises a maintenance operation type and a maintenance operation type dependent maintenance information. The maintenance operation type comprises, for instance, a store operation for storing maintenance information in a first database 30 of the distributed database system 20, a remove operation for removing maintenance information from the first database 30 of the distributed database system 20, and an update operation for updating maintenance information in the first database 30 of the distributed database system 20. The storage driver unit 110 of the processing system 100 is a blockchain component able to emit and observe events with a given semantic.

According to the provided task 51 comprising a store operation, the storage driver 110 of the processing device 100 receives a storing maintenance information and generates S52 an operation request 52 that contains a corresponding event for the operation request 52 and the maintenance information to be stored in a first database 30 of the distributed database system 20. The maintenance information to be stored may be encapsulated as it is or it may be encrypted. The agent 50 may choose how the information is transported over events.

An observer unit 120 of the processing device 100 captures the event of the operation request 52 provided by the storage driver unit 110 of the processing device 100 and extracts the event as a store operation request as well as the maintenance information. The observer unit 120 of the processing device 100 stores S53 the maintenance information in the first database 30 of the distributed database system 20 and emits an operation request response comprising a store operation request response. The store operation request response is an event that contains at least one unique reference to the stored maintenance information. The reference is random generated and cannot be used to track back the stored maintenance information. The observer unit 120 of the processing device 100 may be external to a second distributed database 40 of the distributed database system 20, for instance, a blockchain. The observer unit 120 of the processing device 100 communicates with the second distributed database 40 of the distributed database system 20 only over events provided by the driver storage unit 110 of the processing device 100.

The observer unit 120 of the processing device 100 guaranties the data integrity by the way of communication with events. The observer unit 120 of the processing device 100 provides S54 the store operation request response 54 to the storage driver unit 110 of the processing device 100 to acknowledge the storage of the maintenance information encapsulated the reference of the maintenance information stored in the first database 30 of the distributed database system 20.

The storage driver unit 110 of the processing device 100 observes the store operation request response 54 and extracts the unique reference and provides S55 the reference 55 to the agent 50 for e.g. further processing. If the agent 50 chooses to insert this reference in the second distributed database 40 of the distributed database system 20, the storage observer unit 110 of the processing device 100 inserts S56 the reference 55 to the maintenance information stored in the first database 30 of the distributed database system 20 in the second distributed database 40 of the distributed database system 20.

In connection with the invention, "insertion into the distributed database" and the like can be understood, for instance, such that in particular a transaction or the transactions or a data block with its transactions is transferred to one or more nodes of a distributed database. For instance, if these transactions are successfully validated (e.g. by the node(s)), these transactions are chained as a new data block with at least one existing data block of the distributed database. For this purpose, the corresponding transactions are stored in a new data block.

In particular, this validation and/or chaining can be performed by a trusted node (e.g. a mining node, a block chain oracle, or a block chain platform). In particular, a block chain platform can be understood as a block chain as a service, as suggested in particular by Microsoft or IBM. In particular, a trusted node and/or a node can each store a node checksum (e.g. a digital signature) in a data block (e.g. in those data blocks which they validate and generate and which are then concatenated) in order to enable identifiability of the creator of the data block and/or enable identifiability of the node. This node checksum specifies, for instance, which node has concatenated the corresponding data block with at least one other data block of the distributed database system.

In connection with the invention, the term "transaction" or "transactions" can be understood, for instance, as a smart contract, a data structure or a transaction data record, which in each case comprises one of the transactions or several transactions. In connection with the invention, the term "transaction" or "transactions" may also include, for instance, the data of a transaction of a data block of a blockchain. In particular, a transaction can include a program code that realizes a Smart Contract. For instance, in connection with the invention, a transaction can also be understood as a tax transaction and/or confirmation transaction. Alternatively, a transaction can be a data structure that stores data (for instance, the control commands and/or contract data and/or other data such as video data, user data, measurement data, and the like).

In particular, "storage of transactions in data blocks", "storage of transactions" can be understood as direct storage or indirect storage. Direct storage can be understood, for instance, such that the corresponding data block (of the distributed database) or the corresponding transaction of the distributed database) comprises the respective data. Indirect storage can be understood to mean, for instance, that the corresponding data block or transaction contains a checksum and optionally an additional data record (e.g. a reference or an indication of a storage location) for corresponding data and that the corresponding data is therefore not stored directly in the data block (or transaction).

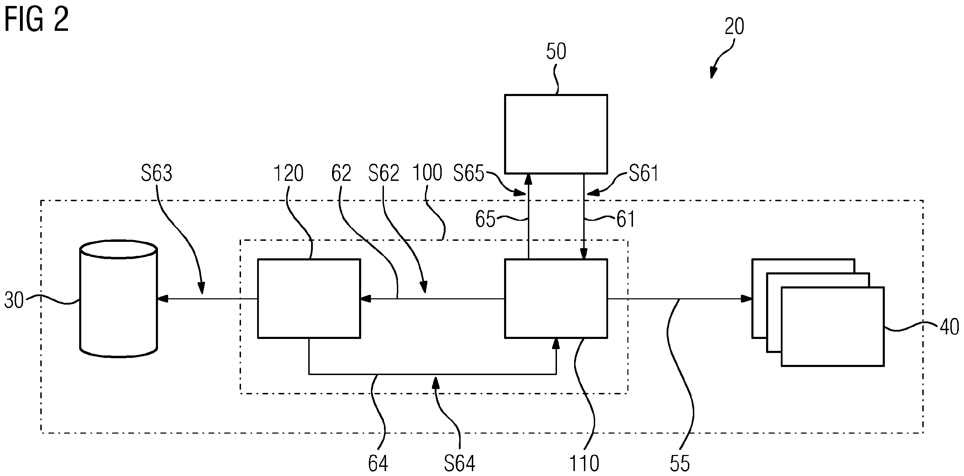

Fig. 2 shows schematically a second specific example illustrating a possible operation or functionality of the method and processing device 100 according to the present invention. In the illustrated exemplary embodiment, an agent 50 provides in a step S61 a task 61 to a storage driver unit 110 of the processing device 100.

As shown in Fig. 2, as an additional functionality or in an alternative embodiment, the task 61 provided S61 by the agent 50 to the storage driver unit 110 of the processing device 100 comprises a maintenance operation type and a maintenance operation type dependent maintenance information, wherein the maintenance operation type comprises a remove operation for removing maintenance information from the first database 30 of the distributed database system 20.

According to the provided S61 task 61, comprising a remove operation, the storage driver unit 110 of the processing device 100 receives a reference referring to the maintenance information in the first database 30 of the distributed database system 20 to be removed and generates S62 an operation request 62 that contains a corresponding event to the operation request 62 and the reference for the maintenance information to be removed in the first database 30 of the distributed database system 20. The event, for instance, contains at least the previous obtained unique reference for the maintenance information to be removed.

The observer unit 120 of the processing device 100 captures the event of the operation request 62 provided S62 by the storage driver unit 110 of the processing device 100 and extracts the event as a remove operation request as well as the reference for the maintenance information. The observer unit 120 of the processing device 100 removes S63 the maintenance information from the first database 30 of the distributed database system 20 and emits an operation request response comprising a remove operation request response. The remove operation request response is an event that contains at least the unique reference for the removed maintenance information.

The observer unit 120 of the processing device 100 provides S64 the remove operation request response 64 to the storage driver unit 110 of the processing device 100 to acknowledge the removal of the maintenance information previously stored in the first database 30 of the distributed database system 20.

The storage driver unit 110 of the processing device 100 observes the remove operation request response and extracts the unique reference and provides S65, for instance, a feedback 65 to the agent 50 indicating successful removing of the maintenance information in the first database 30 of the distributed database system 20 with the provided reference.

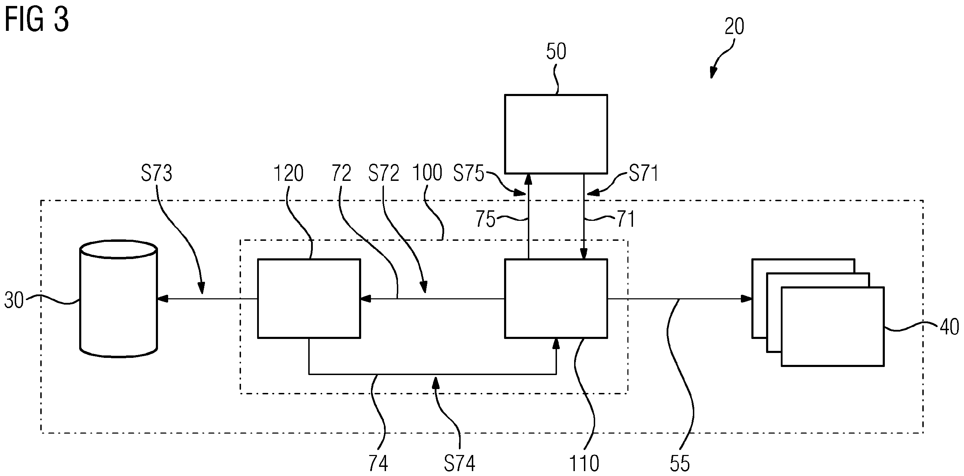

Fig. 3 shows schematically a third example illustrating a possible operation or functionality of the method and processing device 100 according to the present invention. In the illustrated exemplary embodiment, an agent 50 provides in a step S71 a task 71 to a storage driver unit 110 of the processing device 100.

As shown in Fig. 3, as an additional functionality or in an alternative embodiment, the task 71 provided S71 by the agent 50 to the storage driver unit 110 of the processing device 100 may comprise a maintenance operation type and a maintenance operation type dependent maintenance information, wherein the maintenance operation type comprises an update operation for updating maintenance information from the first database 30 of the distributed database system 20.

According to the provided S71 task 71 comprising an update operation 72, the storage driver unit 110 of the processing device 100 receives at least the previously obtained unique reference referring to the maintenance information in the first database 30 of the distributed database system 20 to be updated and the new content for the maintenance information to be updated. The storage driver unit 110 of the processing device 100 further generates S72 an operation request 72 that contains a corresponding event to the operation request 72, the reference and the new content for the maintenance information to be updated in the first database 30 of the distributed database system 20. The event, for instance, contains at least the previously obtained unique reference and the new content for the maintenance information to be updated.

The observer unit 120 of the processing device 100 captures the event of the operation request 72 provided by the storage driver unit 110 of the processing device 100 and extracts the event as an update operation request as well as the reference and the new content for the maintenance information. The observer unit 120 of the processing device 100 removes S73 the maintenance information from the first database 30 of the distributed database system 20 and adds the new content.

The observer unit 120 further emits an operation request response comprising an update operation request response. The update operation request response is an event that contains at least the unique reference for the updated maintenance information. The observer unit 120 of the processing device 100 provides S74 the update operation request response 74 to the storage driver unit 110 of the processing device 100 to acknowledge the update of the maintenance information previous stored in the first database 30 of the distributed database system 20.

The storage driver unit 110 of the processing device 100 observes the update operation request response 74 and extracts the unique reference and provides S75, for instance, a feedback 75 to the agent 50 indicating successful updating of the maintenance information in the first database 30 of the distributed database system 20 with the provided unique reference.

It shall be understood that the functionalities as described with respect to Fig. 1 to Fig. 3 can be freely combined and may be preferably all provided by one and the same method, or system.

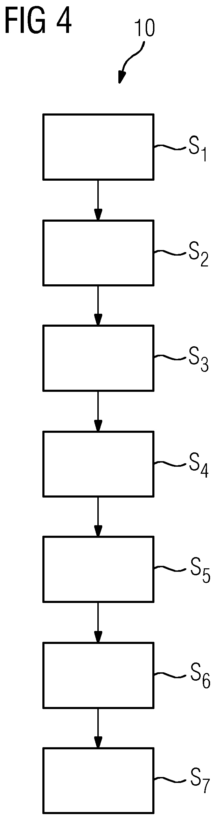

Fig. 4 shows a flowchart of a possible exemplary embodiment of a method 10 for processing maintenance information in a distributed database system 20.

The method comprises in the illustrated exemplary embodiment several main steps. In a first step S1, at least one task 51, 61, 71 from an agent 50 is received by a storage driver unit 110 of the processing device 100. The received task 51, 61, 71 comprises a maintenance operation type and a maintenance operation type dependent maintenance information.

In a further step S2, an operation request on the basis of the received task 51, 61, 71 is generated by the storage driver unit 110 of the processing device 100. The generated operation request comprises an event and the maintenance information of the received task.

In a further step S3 the generated operation request is captured by an observer unit 120 performing a maintenance operation according to the operation type dependent maintenance information of the captured operation request in a first database 30 of said distributed database system 20 on the basis of the event.

In a further step S4 an operation request response is returned by the observer unit 120 to the storage driver unit 110 of the processing device 100 depending on the performed maintenance operation. The returned operation request response comprises a reference to the maintenance information within the first database 30 of said distributed database system 20.

In an alternative or additional embodiment, the method for processing maintenance information in a distributed database system 20 comprises a further step S5 for storing by the storage driver unit 110 of the processing device 100 the reference for a previous stored maintenance information in a second distributed database 40 of said distributed database system 20 on the basis of the store operation request response.

In an alternative or additional embodiment, the method for processing maintenance information in a distributed database system 20 comprises a further step S6 for deleting by the storage driver unit 110 of the processing device 100 the maintenance information in the first database 30 of said distributed database system 20 on the basis of the remove operation request.

In an alternative or additional embodiment, the method for processing maintenance information in a distributed database system 20 comprises a further step S7 for updating by the storage driver unit 110 of the processing device 100 the maintenance information in the first database 30 of said distributed database system 20 on the basis of the update operation request.

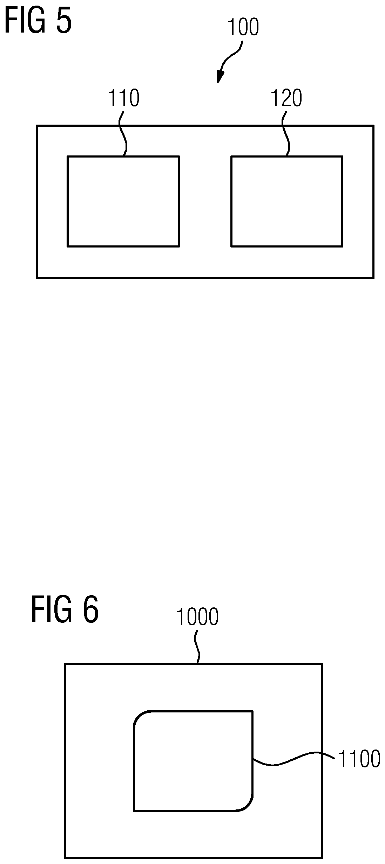

Fig. 5 shows a block diagram of a possible exemplary embodiment of a processing device 100 for processing maintenance information in a distributed database system.

As can be seen from the block diagram of Fig. 3, the processing device 100 according to an embodiment of the second aspect of the present invention is used for processing maintenance information in a distributed database system 20. The processing device 100 comprises in the illustrated embodiment a storage driver unit 110 and an observer unit 120. The storage driver unit 110 may be a blockchain component and configured to emit and observe events with a given semantic. The observer unit 120 may be a blockchain external component configured to emit and observe events. The observer unit 120 can also interact with a storage, for instance, a first database 30 of the distributed database system 20 as described with respect to Fig. 1, Fig. 2 and Fig. 3. On the basis of received events, the observer unit 120 may trigger storing, removing, or updating maintenance information on the first database 30 of the distributed database system 20.

The storage driver unit 110 is configured to receive a task 61, 71, 81 from an agent 50. The received task 51, 61, 71 comprises a maintenance operation type and a maintenance operation type dependent maintenance information. The storage driver unit 110 is further configured to generate an operation request 52, 62, 72 on the basis of the received task 51, 61, 71. The generated operation request 52, 62, 72 comprises an event and the maintenance information of the received task.

The observer unit 120 is configured to capture the generated operation request 52, 62, 72 and to perform a maintenance operation according to the operation type dependent maintenance information of the captured operation request in a first database 30 of the distributed database system 20 on the basis of the event. The observer unit 120 is further configured to return an operation request response 54, 64, 74 to the storage driver unit 110 depending on the performed maintenance operation. The returned operation request response comprises a reference to the maintenance information within the first database 30 of the distributed database system 20.

The processing device 100 can be implemented as a computer. Computers includes, for instance, personal computers, servers, programmable logic controllers (PLCs), handheld computer systems, pocket PC devices, mobile communication devices and other communication devices capable of processing data by computer, processors and other electronic data processing devices. Furthermore, the processing device 100 is may be implemented in a cloud architecture.

Fig. 4 shows a block diagram of a possible exemplary embodiment of a non-transitory computer-readable medium 1000. The non-transitory computer-readable medium 1000 is provided with instructions that, when executed, cause a processing device 100 to execute the method 10 of the present invention.

The method and processing device can be used, for instance, in an access system for a company site using access cards, respectively identity cards that allows employees to enter the company site. On the access cards are stored, for instance, a reference number as well as personal data. To increase the security of the access system and to prevent misuse of the access cards, the access cards may be registered in a distributed database 40 of the distributed database system. According to the regulations of the DSGVO, personal data must be stored removeably, to be able to remove the personal data from the database after an employee e.g. leaves the company. The present invention fulfils the DSGVO regulations by bypassing the blockchain technology specific barriers. Data securely stored by using a blockchain are removeable as well as updateable.

In summary, the invention relates to a computer implemented method 10 and a processing device 100 for processing maintenance information in a distributed database system 20. In a first step S1 a task 51, 61, 71 from an agent 50 is received by a storage driver unit 110, wherein the received task 51, 61, 71 comprises a maintenance operation type and a maintenance operation type dependent maintenance information. In a further step S2 an operation request 52, 62, 72 on the basis of the received task 51, 61, 71 is generated by the storage driver unit 110, wherein the generated operation request comprises an event and the maintenance information of the received task. In a further step S3 the generated operation request 52, 62, 72 by an observer unit 120 is captured and a maintenance operation according to the operation type dependent maintenance information of the captured operation request in a first database 30 of said distributed database system 20 on the basis of the event is performed. In a further step S4 an operation request response 54, 64, 74 to the storage driver unit 110 depending on the performed maintenance operation is returned by the observer unit 120, wherein the returned operation request response comprises a reference 55 to the maintenance information within the first database 30 of said distributed database system 20.

Due to the present invention, blockchain solutions can be used for scenarios where data removing and altering functionality is required.

## Claims

1. A computer implemented method (10) for processing maintenance information in a distributed database system (20), the method comprising the steps of:
Receiving (S1) by a storage driver unit (110) a task (51, 61, 71) from an agent (50), wherein the received task (51, 61, 71) comprises a maintenance operation type and a maintenance operation type dependent maintenance information;
Generating (S2) by the storage driver unit (110) an operation request (52, 62, 72) on the basis of the received task (51, 61, 71), wherein the generated operation request (52, 62, 72) comprises an event and the maintenance information of the received task (51, 61, 71) ;
Capturing (S3) the generated operation request (52, 62, 72) by an observer unit (120) performing a maintenance operation according to the operation type dependent maintenance information of the captured operation request (52, 62, 72) in a first database (30) of said distributed database system (20) on the basis of the event;
Returning (S4) by the observer unit (120) an operation request response (54, 64, 74) to the storage driver unit (110) depending on the performed maintenance operation, wherein the returned operation request response (54, 64, 74) comprises a reference (55) to the maintenance information within the first database (30) of said distributed database system (20).

2. The method according to claim 1, wherein the maintenance operation type indicated by the received task (51, 61, 71) comprises at least one of:
- storing maintenance information in the first database (30),
- removing maintenance information from the first database (30), and/or
- updating maintenance information in the first database (30) of said distributed database system (20).

3. The method according to any of the preceding claims 1 and 2, wherein the operation request comprises at least on of:
- a store operation request (52) to store the maintenance information in the first database (30) by the observer unit (120);
- a remove operation request (62) to remove the maintenance information within the first database (30); and/or
- an update operation request (63) to replace a maintenance information stored in the first database (30) by encapsulating the reference for the maintenance information previously stored with an updated maintenance information.

4. The method according to any of the preceding claims 1 to 3, wherein the operation request response comprises at least one of:
- a store operation request response (54) to acknowledge the storage of the maintenance information encapsulated the reference of the maintenance information stored in the first database (30); and/or
- a remove operation request response (64) to acknowledge the remove of the maintenance information stored in the first database (30);
- an update operation request response (74) to acknowledge the update of the information in the first database (30).

5. The method according to any of the preceding claims 1 to 4, wherein the method further comprises the step of:
Storing (S5) by the storage driver unit (110) the reference (55) in a second distributed database (40) of said distributed database system (20) on the basis of the store operation request response (54).

6. The method according to any of the preceding claims 1 to 5, wherein the method further comprises the step of:
Deleting (S6) by the storage driver unit (110) the maintenance information in the first database (20) of said distributed database system (20) on the basis of the remove operation request (62).

7. The method according to any of the preceding claims 5 to 6, wherein the second distributed database (40)
- is a blockchain and comprises data blocks.
- the data blocks are interlinked with each other by a cryptographic hash function.

8. The method according to any of the preceding claims 5 to 7, wherein the remove operation request (62) invalidates the reference (55) of the maintenance information so that the reference (55) stored in the second distributed database (40) points to a removed maintenance information.

9. A processing device (100) for processing maintenance information in a distributed database system (20), comprises:
a storage driver unit (110) configured to receive a task (51, 61, 71) from an agent (50), wherein the received task (51, 61, 71) comprises a maintenance operation type and a maintenance operation type dependent maintenance information;
the storage driver unit (110) is further configured to generate an operation request (52, 62, 72) on the basis of the received task (51, 61, 71), wherein the generated operation request (52, 62, 72) comprises an event and the maintenance information of the received task (51, 61, 71) ;
an observer unit (120) configured to capture the generated operation request 52, 62, 72) and to perform a maintenance operation according to the operation type dependent maintenance information of the captured operation request (52, 62, 72) in a first database (30) of said distributed database system (20) on the basis of the event;
the observer unit (120) is further configured to return an operation request response (54, 64, 74) to the storage driver unit (110) depending on the performed maintenance operation, wherein the returned operation request response (54, 64, 74) comprises a reference (55) to the maintenance information within the first database (30) of said distributed database system (20).

10. The processing device (100) according to claim 9, wherein the maintenance operation type indicated by the received task (51, 61, 71) comprises at least:
- storing maintenance information in the first database (30),
- removing maintenance information from the first database (30),
- updating maintenance information in the first database (30) of said distributed database system (20).

11. The processing device (100) according to any of the preceding claims 9 and 10, wherein the operation request comprises at least:
- a store operation request (52) to store the maintenance information in the first database (30) by the observer unit (120);
- a remove operation request (62) to remove the maintenance information within the first database (30);
- an update operation request (72) to replace a maintenance information stored in the first database (30) by encapsulating the reference (55) for the maintenance information previously stored with an updated maintenance information.

12. The processing device (100) according to any of the preceding claims 9 to 11, wherein the operation request response comprises at least:
- a store operation request response (54) to acknowledge the storage of the maintenance information encapsulated the reference (55) of the maintenance information stored in the first database (30);
- a remove operation request response (64) to acknowledge the remove of the maintenance information stored in the first database (30);
- an update operation request response (74) to acknowledge the update of the information in the first database (30).

13. The processing device (100) according to any of the preceding claims 9 to 12, wherein the storage driver unit (110) is further configured to:
store the reference (55) in a second distributed database (40) of said distributed database system (20) on the basis of the stored operation request response (54).

14. The processing device (100) according to claim 13, wherein the remove operation request invalidates the reference of the maintenance information so that the reference (55) stored in the second distributed database (40) points to a non-existing maintenance information.

15. A non-transitory computer-readable medium (1000) provided with executable instructions (1100) that, when executed, cause a processing device (100) to:
receive a task (51, 61, 71) from an agent (50), wherein the received task (51, 61, 71) comprises a maintenance operation type and a maintenance operation type dependent maintenance information;
generate an operation request (52, 62, 72) on the basis of the received task (51, 61, 71), wherein the generated operation request (52, 62, 72) comprises an event and the maintenance information of the received task (51, 61, 71) ;
capture the generated operation request (52, 62, 72) and perform a maintenance operation according to the operation type dependent maintenance information of the captured operation request (52, 62, 72) in a first database (30) of said distributed database system (20) on the basis of the event;
return an operation request response (54, 64, 74) depending on the performed maintenance operation, wherein the returned operation request response (52, 62, 72) comprises a reference (55) to the maintenance information within the first database (30) of said distributed database system (20).

## Amended claims

### Amended claims in accordance with Rule 137(2) EPC.

1. A computer implemented method (10) for processing maintenance information in a distributed database system (20), the method comprising the steps of:
Receiving (S1) by a storage driver unit (110) a task (51, 61, 71) from an agent (50), wherein the received task (51, 61, 71) comprises a maintenance operation type and a maintenance operation type dependent maintenance information;
Generating (S2) by the storage driver unit (110) an operation request (52, 62, 72) on the basis of the received task (51, 61, 71), wherein the generated operation request (52, 62, 72) comprises an event and the maintenance information of the received task (51, 61, 71) ;
Capturing (S3) the generated operation request (52, 62, 72) by an observer unit (120) performing a maintenance operation according to the operation type dependent maintenance information of the captured operation request (52, 62, 72) in a first database (30) of said distributed database system (20) on the basis of the event, wherein the first database (30) is stored in a memory unit;
Returning (S4) by the observer unit (120) an operation request response (54, 64, 74) to the storage driver unit (110) depending on the performed maintenance operation, wherein the returned operation request response (54, 64, 74) comprises a reference (55) to the maintenance information within the first database (30) of said distributed database system (20),
wherein the maintenance operation type indicated by the received task (51, 61, 71) comprises at least one of:
- storing maintenance information in the first database (30),
- removing maintenance information from the first database (30), and/or
- updating maintenance information in the first database (30) of said distributed database system (20),
wherein the operation request comprises at least on of:
- a store operation request (52) to store the maintenance information in the first database (30) by the observer unit (120);
- a remove operation request (62) to remove the maintenance information within the first database (30); and/or
- an update operation request (63) to replace a maintenance information stored in the first database (30) by encapsulating the reference for the maintenance information previously stored with an updated maintenance information, and
wherein the method further comprises the steps of:
Storing (S5) by the storage driver unit (110) the reference (55) in a second distributed database (40) of said distributed database system (20) on the basis of the store operation request response (54);
Deleting (S6) by the storage driver unit (110) the maintenance information in the first database (20) of said distributed database system (20) on the basis of the remove operation request (62), wherein the remove operation request (62) invalidates the reference (55) of the maintenance information so that the reference (55) stored in the second distributed database (40) points to a removed maintenance information; and
Updating (S7) by the storage driver unit (110) the maintenance information in the first database (20) of said distributed database system (20) by encapsulating the reference (55) for the maintenance information previously stored with an updated maintenance information on the basis of the update operation request (63), and
wherein the second distributed database (40) is a blockchain and comprises data blocks, and wherein the data blocks are interlinked with each other by a cryptographic hash function.

2. The method according to claim 1, wherein the operation request response comprises at least one of:
- a store operation request response (54) to acknowledge the storage of the maintenance information encapsulated the reference of the maintenance information stored in the first database (30); and/or
- a remove operation request response (64) to acknowledge the remove of the maintenance information stored in the first database (30);
- an update operation request response (74) to acknowledge the update of the information in the first database (30).

3. A processing device (100) for processing maintenance information in a distributed database system (20), comprises:
a storage driver unit (110) configured to receive a task (51, 61, 71) from an agent (50), wherein the received task (51, 61, 71) comprises a maintenance operation type and a maintenance operation type dependent maintenance information;
the storage driver unit (110) is further configured to generate an operation request (52, 62, 72) on the basis of the received task (51, 61, 71), wherein the generated operation request (52, 62, 72) comprises an event and the maintenance information of the received task (51, 61, 71) ;
an observer unit (120) configured to capture the generated operation request 52, 62, 72) and to perform a maintenance operation according to the operation type dependent maintenance information of the captured operation request (52, 62, 72) in a first database (30) of said distributed database system (20) on the basis of the event, wherein the first database (30) is stored in a memory unit;
the observer unit (120) is further configured to return an operation request response (54, 64, 74) to the storage driver unit (110) depending on the performed maintenance operation, wherein the returned operation request response (54, 64, 74) comprises a reference (55) to the maintenance information within the first database (30) of said distributed database system (20),
wherein the maintenance operation type indicated by the received task (51, 61, 71) comprises at least:
- storing maintenance information in the first database (30),
- removing maintenance information from the first database (30),
- updating maintenance information in the first database (30) of said distributed database system (20), and
wherein the operation request comprises at least:
- a store operation request (52) to store the maintenance information in the first database (30) by the observer unit (120);
- a remove operation request (62) to remove the maintenance information within the first database (30);
- an update operation request (72) to replace a maintenance information stored in the first database (30) by encapsulating the reference (55) for the maintenance information previously stored with an updated maintenance information, and
wherein the storage driver unit (110) is further configured to:
store the reference (55) in a second distributed database (40) of said distributed database system (20) on the basis of a stored operation request response (54);
delete maintenance information in the first database (30) od said distributed database system (20) on the basis of the remove operation request, wherein the remove operation request invalidates the reference of the maintenance information so that the reference (55) stored in the second distributed database (40) points to a non-existing maintenance information; and
update the maintenance information in the first database of said distributed database system by encapsulating the reference for the maintenance information previously stored with an updated maintenance information on the basis of the update operation request, and
wherein the second distributed database (40) is a blockchain and comprises data blocks, and wherein the data blocks are interlinked with each other by a cryptographic hash function.

4. The processing device (100) according to claim 3, wherein the operation request response comprises at least:
- a store operation request response (54) to acknowledge the storage of the maintenance information encapsulated the reference (55) of the maintenance information stored in the first database (30);
- a remove operation request response (64) to acknowledge the remove of the maintenance information stored in the first database (30);
- an update operation request response (74) to acknowledge the update of the information in the first database (30).

5. A non-transitory computer-readable medium (1000) provided with executable instructions (1100) that, when executed, cause a processing device (100) to process the method according to claim 1 or claim 2.
